# EUROPÄISCHE PATENTSCHRIFT

(11) **EP 4 454 478 B1**
(45) Veröffentlichungstag und Bekanntmachung des Hinweises auf die Patenterteilung: **25.02.2026**
(21) Anmeldenummer: 24169638.4
(22) Anmeldetag: 11.04.2024
(51) Int. Cl.: A23G 9/16, A23G 9/22

(54) **HERSTELLUNGSVORRICHTUNG ZUR HERSTELLUNG VON SPEISEEIS**
PRODUCTION DEVICE FOR PRODUCING ICE CREAM
DISPOSITIF DE FABRICATION DE CRÈME GLACÉE

(30) Priorität: 26.04.2023 DE 102023110785
(43) Veröffentlichungstag der Anmeldung: 30.10.2024
(73) Patentinhaber: RISCHEWSKI, Marc, 75210 Keltern (DE)
(72) Erfinder: RISCHEWSKI, Marc, 75210 Keltern (DE)
(74) Vertreter: Wacker, Jost Oliver

(56) Entgegenhaltungen:
- US-A- 5 016 446
- US-B2- 7 815 954

## Beschreibung

Die Erfindung betrifft eine Herstellungsvorrichtung, die für die Herstellung von Speiseeis aus einem Flüssigkeitsgemisch geeignet ist, wie insbesondere für die Herstellung traditionell zubereiteter, hochwertiger Eiscreme mit einer relativ festen und trockenen Mikrokristallstruktur, nach dem Oberbegriff des Anspruchs 1. Die Herstellungsvorrichtung umfasst hierzu einen in einem Vorrichtungsgehäuse vorgesehenen Verarbeitungsbehälter mit einer temperierbaren Innenwandung, die einen zur Aufnahme des Flüssigkeitsgemisches geeigneten Innenraum umschließt. In dem Innenraum ist dabei ein Rührwerk einer Rühreinrichtung angeordnet und antreibbar. Zudem weist der Verarbeitungsbehälter eine Einfüllöffnung für die Eingabe des Flüssigkeitsgemisches und sonstiger Zutaten sowie eine Auslassöffnung für die Abgabe des Produktes auf.

Aus der DE 692 02 987 T2 ist eine Herstellungsvorrichtung zur Herstellung eines fließfähigen Produktes bekannt, die einen Verarbeitungsbehälter aufweist, der innerhalb eines Vorrichtungsgehäuses aufgenommen ist. Der Verarbeitungsbehälter ist dabei über eine Behältertür verschließbar, an der eine Einfüllöffnung für Herstellungszutaten sowie eine verschließbare Ausgabeöffnung vorgesehen ist, über die das hergestellte Produkt austreten kann. Die Ausgabeöffnung ist hierzu in eine Offenstellung verbringbar, in der das Produkt insbesondere bei Betrieb eines Rührwerkes im Verarbeitungsbehälter frei aus diesem ausfließen kann.

Nachteilig an der bekannten Herstellungsvorrichtung ist, dass die Austrittsgeschwindigkeit des Produktes im freien Ausfluss relativ gering ist. Um dennoch eine ausreichend schnelle Entnahme des Produktes nach dessen Fertigstellung zu ermöglichen und dadurch eine kritische Erwärmung des Produktes zu vermeiden, ist die Ausgabeöffnung relativ groß dimensioniert, was wiederum nur eine sehr grobe Portionierung des austretenden Produktes erlaubt. Typischerweise wird daher eine mit der Herstellungsvorrichtung hergestellte hochwertige Eiscreme zunächst in einen Sammelbehälter abgefüllt, aus dem heraus dann erst die eigentliche Portionierung erfolgt, wie beispielsweise manuell oder mittels einer Portionierarmatur in eine Verpackung oder in einen Becher hinein.

US 5 016 446 A beschreibt eine Vorrichtung zur Abgabe von bereits hergestelltem Softeis, das aus einem Reservoir zugeführt wird. Die Vorrichtung weist neben einem Rührwerk einen weiteren rotierenden Flügel auf, durch dessen Bewegung das hergestellte Softeis in Richtung einer Abgabeeinrichtung bewegt wird.

US 7,815,954 B2 offenbart eine Vorrichtung zum Auspressen eines Behälters mit einem weich servierten Lebensmittelprodukt. Die Vorrichtung weist dabei eine Erwärmungseinrichtung und einen Auspresskolben auf, um das im gefrorenen Zustand eingesetzte Lebensmittelprodukt erwärmen und in den weichen auspressbaren Zustand versetzen sowie mittels des Auspresskolbens aus dem Behälter auspressen zu können.

Die Aufgabe der Erfindung ist es, bei einer gattungsgemäßen Herstellungsvorrichtung die genannten Nachteile zu vermeiden und eine schnellere und variabel portionierbare Entnahme eines fertiggestellten Produktes zu ermöglichen, wie insbesondere auch im Falle einer traditionell hergestellten Eiscreme mit relativ hoher Viskosität.

Diese Aufgabe wird durch eine Herstellungsvorrichtung zur Herstellung von Speiseeis mit den Merkmalen des Anspruchs 1 gelöst. Dabei ist im Innenraum des Verarbeitungsbehälters zusätzlich zum Rührwerk ein in Richtung der Auslassöffnung, insbesondere linear verlagerbares Schieberelement vorgesehen. Durch das zusätzliche Schieberelement kann das im Verarbeitungsbehälter mittels Rühren und gleichzeitiges Abkühlen hergestellte Produkt nach dessen Fertigstellung in Richtung der Auslassöffnung verlagert werden, um in der Offenstellung der Auslassöffnung die Ausgabe des Produktes zu beschleunigen und zu vereinheitlichen. Auf diese Weise wird für das portionierte Abfüllen des hergestellten Produktes keine separate Abfülleinrichtung mehr benötigt. Zudem wird hierdurch die mechanische Beanspruchung beim Umfüllen des Produktes in einen Zwischenbehälter und beim weiteren Umfüllen vom Zwischenbehälter in die separate Abfülleinrichtung vermieden, wodurch das Produkt mit einer besseren, homogenen und stabilen Mikrokristallstruktur zur Verfügung gestellt werden kann.

In einer besonders vorteilhaften Ausführungsform ist das Schieberelement durch eine entlang des Rührwerks verlagerbare und umlaufend an die Innenwandung anlegbare im Wesentlichen kreisförmige Scheibe gebildet. Durch die Verwendung einer im Wesentlichen kreisförmigen Scheibe kann das Schieberelement gegenüber der Innenwandung des Verarbeitungsbehälters umlaufend abdichtend verlagert werden, um das hergestellte Produkt im Wesentlichen vollständig in Richtung der Auslassöffnung zu verlagern und dadurch den Ertrag zu erhöhen sowie gleichzeitig den späteren Reinigungsaufwand zu vermindern.

Dabei ist es günstig, wenn das Schieberelement am Rührwerk geführt in einer Verlagerungsrichtung linear verlagerbar ist, wobei die lineare Verlagerung mit der Drehbewegung des Rührwerks überlagert ist. Auf diese Weise ist das Schieberelement am Rührwerk abgestützt, was eine besonders stabile und präzise Verlagerung entlang des Innenraums ermöglicht. Zudem wird das Schieberelement auf diese Weise mit einer Drehbewegung angetrieben, aus der eine besonders gleichmäßige Gleitbewegung an der Innenwandung resultiert und die zur Erzeugung der linearen Bewegung in die Verlagerungsrichtung genutzt werden kann.

Vorteilhafterweise kann das Schieberelement dabei mittels eines Antriebselementes verlagert werden, das entlang einer Antriebsachse des Rührwerks in Richtung der Auslassöffnung verlagerbar ist. Hierdurch kann der Antrieb des Schieberelementes sehr platzsparend und stabil innerhalb des Rührwerks aufgenommen werden.

Dabei ist es günstig, wenn das Antriebselement innerhalb eines Achselementes der Rühreinrichtung aufgenommen ist und bezüglich der Verlagerungsrichtung wahlweise verlagerbar oder in einer Position fixierbar ist. Dadurch kann die Herstellungsvorrichtung zwischen einem reinen Rührbetrieb, in dem das Flüssigkeitsgemisch beziehungsweise das hieraus hergestellte Produkt allein von einer Rührbewegung des Rührwerks beaufschlagt wird, und einem Ausgabebetrieb umgeschaltet werden, in dem alternativ oder zusätzlich zur Drehbewegung des Rührwerks eine lineare Verlagerung des Schieberelementes gegenüber der Ausgabeöffnung erfolgt.

Vorteilhafterweise ist das Schieberelement mittels einer Antriebseinrichtung verlagerbar, die mit einem Antriebsmotor der Rühreinrichtung kuppelbar ist. Auf diese Weise wird für die Verlagerung des Schieberelementes kein zusätzlicher Antriebsmotor benötigt, wodurch die Funktion des Schieberelementes besonders nachhaltig und energiesparend zur Verfügung gestellt werden kann. Zudem kann die Auswurfbewegung hierdurch besonders einfach mit der Drehbewegung der Rühreinrichtung abgestimmt werden.

Ferner ist es günstig, wenn die Antriebseinrichtung ein mit einem Gewindeteil des Antriebselementes kämmendes Gegengewindeteil aufweist und zwischen einer Haltestellung, in der das Gegengewindeteil zusammen mit dem Antriebselement verdrehbar ist, und einer Verlagerungsstellung verstellbar ist, in der das Gegengewindeteil unverdrehbar fixiert ist. Auf diese Weise kann das Antriebselement zusammen mit dem damit verbundenen Schieberelement bei aktiviertem Drehantrieb der Rühreinrichtung infolge des kämmenden Eingriffs mit dem fixierten Gegengewindeteil linear gegenüber der Auslassöffnung verlagert werden, um in Verlagerungsrichtung einen Auswurfhub oder einen Rückholhub entlang des Innenraums vorzunehmen. Hierdurch kann in beide Richtungen eine stabile lineare Verlagerung des Schieberelementes gewährleistet werden, die in einfacher Weise zu- beziehungsweise abschaltbar ist.

In einer weiteren vorteilhaften Ausführungsform ist die Antriebseinrichtung mittels einer zwischen dem Gegengewindeteil und einem Trägerelement angeordneten Kupplungseinrichtung zwischen der Haltestellung und der Verlagerungsstellung umschaltbar. Auf diese Weise kann das Gegengewindeteil an einem feststehenden Element festgelegt werden, um mittels der Drehbewegung der Rühreinrichtung eine lineare Verlagerung des Schieberelementes zu starten.

Dabei ist die Kupplungseinrichtung vorzugsweise durch eine Elektromagnetkupplung gebildet. Hierdurch ist eine ferngesteuerte beziehungsweise eine teil- oder vollautomatische Umschaltung zwischen der Haltestellung und der Verlagerungsstellung besonders einfach umsetzbar.

Zudem ist es günstig, wenn die Antriebseinrichtung mittels einer Steuerungseinrichtung in Abhängigkeit von einer festgestellten Anzahl von Umdrehungen der Rühreinrichtung, die jeweils mit einer bestimmten linearen Wegstrecke des Schieberelementes korreliert, zwischen der Haltestellung- und der Verlagerungsstellung umschaltbar ist. Hierdurch kann die lineare Verlagerung des Schieberelementes in besonders einfacher Weise wegabhängig gesteuert werden.

Alternativ oder zusätzlich hierzu ist die Antriebseinrichtung in Abhängigkeit von einer Positionssensorik zwischen der Haltestellungstellung und der Verlagerungsstellung umschaltbar, um eine besonders sichere und präzise Positionierung des Schieberelementes im Verarbeitungsbehälter beziehungsweise gegenüber der Auslassöffnung gewährleisten zu können.

In einer vorteilhaften Ausführungsform kann das Schieberelement über die Steuerungseinrichtung mit unterschiedlichen Geschwindigkeiten angetrieben werden, um beispielsweise eine besonders gleichmäßige beziehungsweise schonende Ausgabe des Produktes über die Auslassöffnung zu ermöglichen.

Hierbei ist es besonders günstig, wenn das Schieberelement während eines Auswurfhubes in einem Startabschnitt mit einer höheren linearen Geschwindigkeit angetrieben ist als in einem Endabschnitt. Auf diese Weise wird das Produkt zu Beginn des Auswurfhubes relativ rasch in Richtung der Auslassöffnung befördert, um vor dieser einen geeigneten Pegel einzustellen, bei dem das Produkt infolge des erhöhten hydraulischen Druckes schneller und gleichmäßiger austreten kann. Im Endabschnitt des Auswurfhubes wird die Geschwindigkeit dagegen reduziert, um eine zu hohe Druckbeaufschlagung des Produktes zu vermeiden und einen schonenden Austritt zu ermöglichen.

Vorteilhafterweise ist das Schieberelement entlang der Verlagerungsrichtung beidseitig verlagerbar, so dass neben dem Auswurfhub des Schieberelementes auch ein dazu entgegengesetzter Rückholhub durchgeführt werden kann. Auf diese Weise kann das Schieberelement nach einem beendeten Herstellungs- und Ausgabevorgang in einfacher Weise und schnell wieder in die Ausgangsstellung verbracht werden, um einen neuen Herstellungs- und Ausgabevorgang durchführen zu können.

In der alternativen Ausführungsform der Erfindung ist das Schieberelement durch einen separat zum Antriebsmotor der Rühreinrichtung vorgesehenen Antriebsmotor verlagerbar. Auf diese Weise können der Auswurfhub und der Rückholhub des Schieberelementes auch unabhängig vom Betrieb der Rühreinrichtung durchgeführt werden.

Vorteilhafterweise ist an der Auslassöffnung eine Portionierarmatur vorgesehen. Die Portionierarmatur ist dabei beispielsweise durch einen manuell, per Fußpedal oder automatisch beziehungsweise teilautomatisch bedienbaren Ausgabehahn gebildet, an dem vorzugsweise eine bestimmte Ausgabemenge eingestellt beziehungsweise variabel einstellbar ist. Auf diese Weise kann eine direkte Portionierung des aus dem Verarbeitungsbehälter ausgegebenen Produktes erfolgen, um dieses beispielsweise mit einer vorgegebenen Menge verpacken oder direkt verkaufen zu können. Im Falle einer vollautomatischen Ausgabe an der Portionierarmatur kann beispielsweise eine Steuerung vorgesehen sein, mittels der die Geschwindigkeit des Rührwerks beziehungsweise des Schiebers, die Temperatur des Produktes, der Öffnungsgrades der Portionierarmatur und/oder dessen Öffnungsgeschwindigkeit gesteuert werden kann. Zudem kann an der Portionierarmatur zusätzlich eine Zuführeinrichtung zum Zugeben beziehungsweise Beimischen von Variegato oder einer sonstigen Zutat zum ausgegebenen Produkt vorgesehen sein.

Hierbei ist es günstig, wenn das Schieberelement in Abhängigkeit einer Stellung der Portionierarmatur verlagert werden kann. Hierdurch ist es beispielsweise möglich, das Schieberelement nur bei geöffneter Portionierarmatur in Richtung der Auslassöffnung zu verlagern, um eine schonende Abgabe des Produktes zu ermöglichen.

In einer besonders bevorzugten Ausführungsform erstrecken sich der Verarbeitungsbehälter und eine Antriebsachse des Schieberelementes zur Auslassöffnung hin bezüglich der Gravitationsrichtung schräg nach unten, wobei die Antriebsachse in einem Anstellwinkel gegenüber der Horizontalen angeordnet ist. Hierdurch ist die Auslassöffnung in einer freien Fließrichtung des Produktes angeordnet, wodurch dessen Verlagerung in Richtung der Auslassöffnung mittels des Schieberelementes zusätzlich vereinfacht wird.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht einer Herstellungsvorrichtung zur Herstellung von Speiseeis,
- Figur 2: einen Längsschnitt durch die Eisherstellungsvorrichtung nach Figur 1 in einer Ausgangsstellung eines Schieberelementes,
- Figur 3: eine perspektivische Ansicht eines vereinzelt dargestellten Rührwerkes der Eisherstellungsvorrichtung nach Figur 1,
- Figur 4: einen Schnitt durch eine Antriebseinrichtung der Eisherstellungsvorrichtung nach Figur 1,
- Figur 5: einen Längsschnitt durch die Eisherstellungsvorrichtung nach Figur 1 in einer Mittelstellung des Schieberelementes und
- Figur 6: einen Längsschnitt durch die Eisherstellungsvorrichtung nach Figur 1 in einer Endstellung des Schieberelementes.

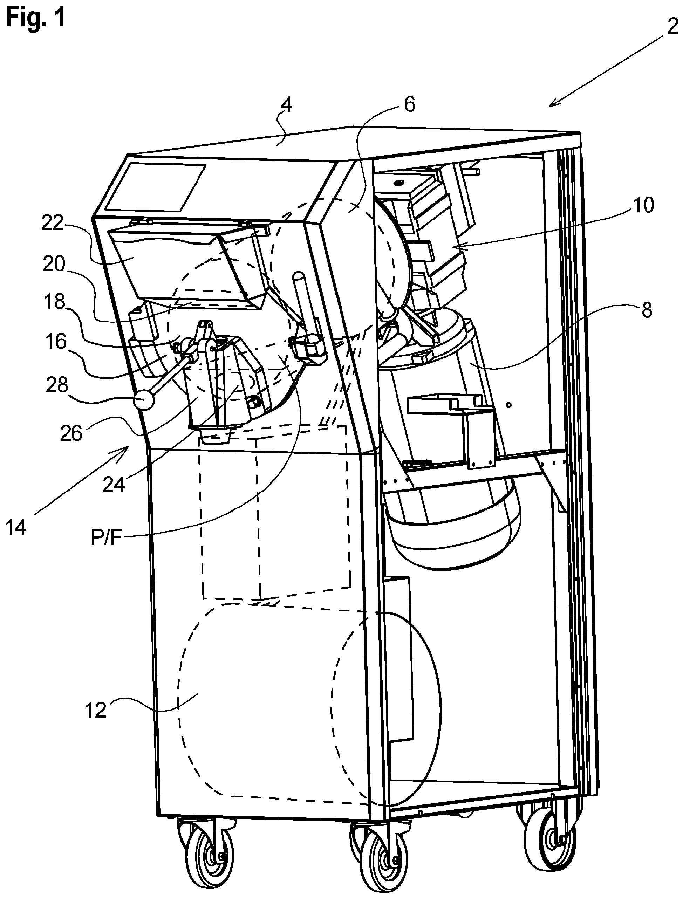

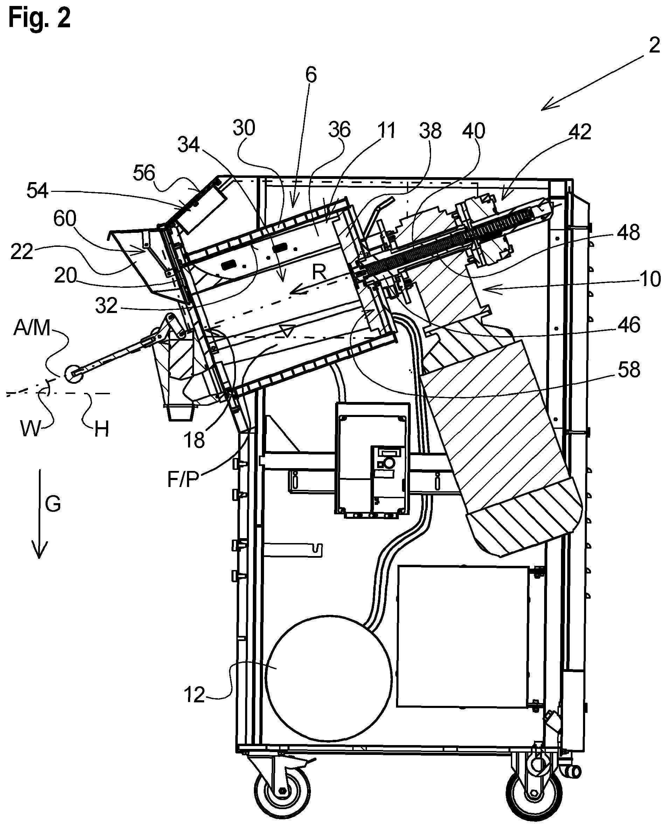

Fig. 1 zeigt eine Herstellungsvorrichtung 2 zur Herstellung eines Produktes P in Form von Speiseeis, wie spezielles Speiseeis, Dondurma, Sorbet, Glace oder Eiscreme, wie insbesondere traditionell hergestelltes Speiseeis. Das Produkt P wird dabei aus einem Flüssigkeitsgemisch F hergestellt. Die Herstellungsvorrichtung weist ein Vorrichtungsgehäuse 4 auf, in dem ein Verarbeitungsbehälter 6 aufgenommen ist, in dem das Flüssigkeitsgemisch F gerührt und gleichzeitig abgekühlt werden kann. Hierzu ist in dem Vorrichtungsgehäuse 4, wie insbesondere aus Figur 2 zu entnehmen ist, ein Antriebsmotor 8 mit Motorgetriebe 10 zum Antrieb einer Rühreinrichtung 11 um eine Antriebsachse A herum sowie ein Kompressor 12 zur Beaufschlagung des Vorrichtungsgehäuses 4 durch ein Kältemittel vorgesehen.

Wie aus Figur 1 zudem zu entnehmen ist, ist an einer Vorderseite 14 des Vorrichtungsgehäuses 4 eine Tür 16 verschwenkbar gehalten, mittels der eine Behälteröffnung 18 des Verarbeitungsbehälters 6 geöffnet und verschlossen werden kann. In die Tür 16 ist dabei eine Einfüllöffnung 20 eingelassen, an der, wie dargestellt, eine trichterartige Einfüllhilfe 22 angeordnet ist und über die das für die Eisherstellung herzustellende oder bereits vorbereitete Flüssigkeitsgemisch F und sonstige Zutaten in den Verarbeitungsbehälter 6 eingegeben werden können.

Ferner ist in die Tür 16 eine Auslassöffnung 24 eingelassen, an der eine Portionierarmatur 26 angeordnet ist, die mittels einer Handhabe 28 zwischen einer Schließstellung, in der die Auslassöffnung verschlossen ist, und einer Offenstellung verschwenkbar ist, in der eine Ausgabe des hergestellten Produktes P aus dem Verarbeitungsbehälter 6 erfolgen kann. Die Auslassöffnung 24 kann dabei zwischen der Schließstellung und der Offenstellung stufenlos eingestellt werden. Dabei kann an der Tür 16 eine alternative Ausführung der Portionierarmatur 26 vorgesehen sein, die beispielsweise ein manuell verstellbares beziehungsweise verschiebbares Verschlusselement für die Auslassöffnung 24 aufweist (nicht dargestellt).

Wie aus Figur 2 zu entnehmen ist, weist der Verarbeitungsbehälter 6 eine temperierbare Behälterwand 30 mit einer Innenwandung 32 auf, die einen Innenraum 34 begrenzt. Der Innenraum 34 und der Verarbeitungsbehälter 6 insgesamt erstrecken sich dabei entlang einer Mittelachse A. Zudem ist im Innenraum 34 ein Rührwerk 36 der Rühreinrichtung 11 sowie ein Schieberelement 38 in Form einer im Wesentlichen kreisförmigen Scheibe aufgenommen. Das Schieberelement 38 ist dabei an die Form und Größe der Innenwandung 32 angepasst und liegt an dieser umlaufend und abdichtend an. Zudem ist das Schieberelement 38 am Rührwerk 36 geführt in Richtung der Auslassöffnung 24 linear verlagerbar, um über diese das im Innenraum 34 hergestellte Produkt P ausgeben zu können.

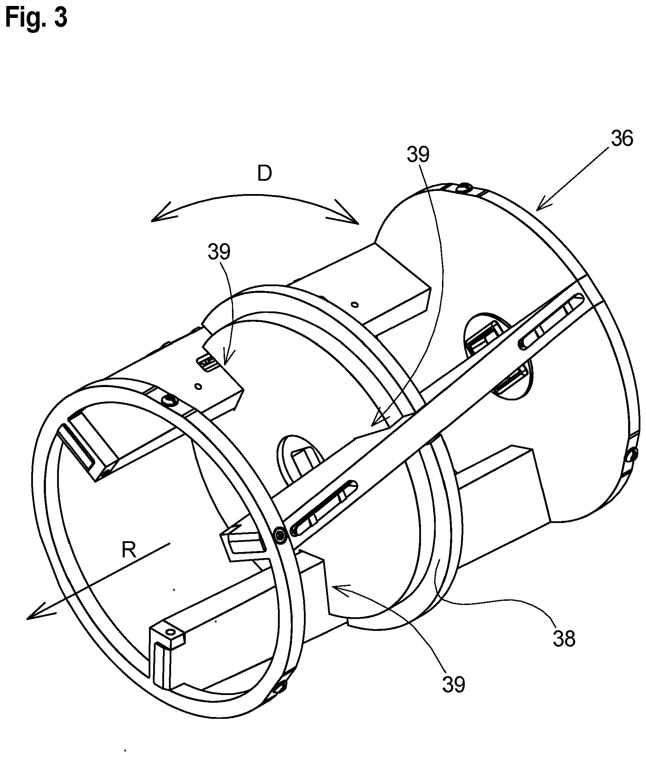

Zur linearen Verlagerung sind in das Schieberelement 38 gemäß Figur 3 Führungsausnehmungen 39 eingelassen, die derart an das Rührwerk 36 angepasste sind, dass das Schieberelement 36 in Verlagerungsrichtung R am Rührwerk 36 gleitend verlagert werden kann, während es in Drehrichtung D drehfest mit diesem verbunden ist. Auf diese Weise kann eine, durch das drehende Rührwerk 36 generierte Drehbewegung des Schieberelementes 38 mit einer linearen Bewegung überlagert werden.

Wie aus Figur 2 zu entnehmen ist, ist die Verlagerungsrichtung R des Schieberelementes 38 zusammen mit der Antriebsachse A der Rühreinrichtung 11 und der Mittelachse M des Verarbeitungsbehälters 6 zur Behälteröffnung 18 hin bezüglich der Gravitationsrichtung G schräg nach unten gerichtet, wobei die Antriebsachse A und die dazu koaxiale Mittelachse M einen Anstellwinkel W zur Horizontalen H einschließen.

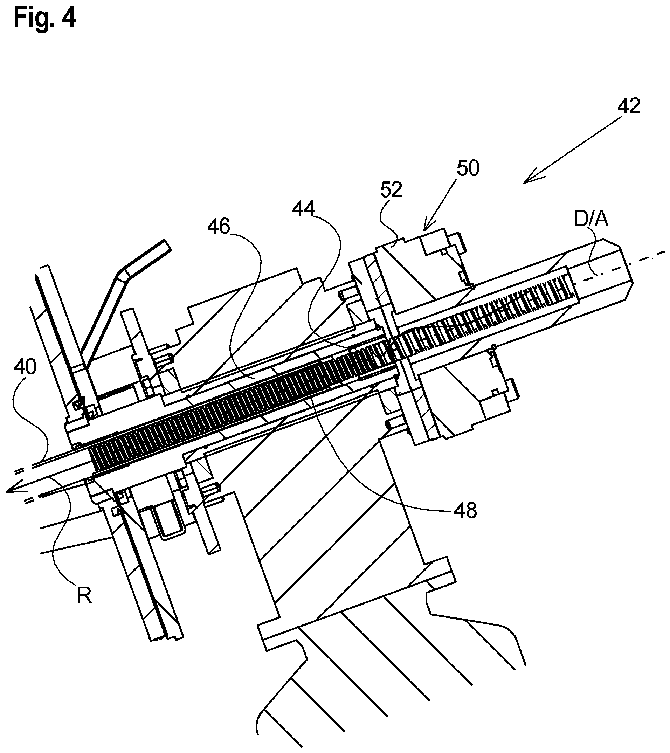

Zur Verlagerung des Schieberelementes 38 entlang des Innenraums 34 ist dieses mit einem stangenförmigen Antriebselement 40 einer Antriebseinrichtung 42 verbunden. Das Antriebselement 40 weist, wie aus Figur 4 zu entnehmen ist, ein Gewindeteil 44 auf, das innerhalb eines Achselementes 46 der Rühreinrichtung 11 mit einem Gegengewindeteil 48 der Antriebseinrichtung 42 kämmt. Dieses Gegengewindeteil 48 ist beispielsweise durch eine Gewindestange gebildet, die wiederum über eine Kupplungseinrichtung 50 mit dem Achselement 46 der Rühreinrichtung 11 kuppelbar ist.

Die Kupplungseinrichtung 50 ist dabei zwischen einer Haltestellung, in der das Gegengewindeteil 48 drehfest mit dem Achselement 46 der Rühreinrichtung 11 verbunden ist und sich dadurch im Betrieb der Rühreinrichtung 11 gemeinsam mit dem Antriebselement 40 um die Antriebsachse A herum verdreht, und einer Verlagerungsstellung umschaltbar. In dieser Verlagerungsstellung ist das Gegengewindeteil 48 an einem gehäusefesten Träger 52 fixiert und das Antriebselement 40 dreht sich dadurch im Betrieb der Rühreinrichtung 11 relativ zum Gegengewindeteil 48. Durch die kämmende Verbindung des Gewindeteils 44 des sich drehenden Antriebselementes 40 mit dem fixierten Gegengewindeteil 48 wird das Antriebselement 40 hierbei entlang der Antriebsachse A der Rühreinrichtung 11 in Verlagerungsrichtung R aus dem Achselement 46 heraus verlagert, wodurch wiederum das am Rührwerk 36 geführt gelagerte und sich mit diesem mitdrehende Schieberelement 38 gemäß Figur 2 mit einer linearen Bewegung in Richtung der Auslassöffnung 24 überlagert wird.

Zum An- und Abschalten der Antriebseinrichtung 42 kann diese mit einer Steuerungseinrichtung 54 verbunden sein, die beispielsweise eine Aktivierung über ein Bedienfeld 56 oder über Bedienelemente ermöglicht. Zudem kann vorgesehen sein, dass die Steuerungseinrichtung 54 die Kupplungseinrichtung in Abhängigkeit von einer Anzahl an Umdrehungen der Rühreinrichtung 11 beziehungsweise des Motorgetriebes 10 von der Verlagerungsstellung in die Haltestellung umschaltet, um die lineare Verlagerung des Schieberelementes 38 während eines Auswurfhubes zu beenden. Alternativ oder zusätzlich zur Steuerung in Abhängigkeit eine Anzahl an Umdrehungen, die mit einer Wegstrecke korreliert, ist auch eine Steuerung in Abhängigkeit von einer Sensorik, wie beispielsweise einer Positions-, Widerstands- und/oder Temperatursensorik denkbar. Zusätzlich kann die Antriebseinrichtung auch in Abhängigkeit einer Stellung der Portionierarmatur 26 gesteuert werden.

Die Funktionsweise der Herstellungsvorrichtung 2 ist nachfolgend anhand der Figuren 2, 5 und 6 dargestellt:
Zu Beginn eines Herstellungsvorganges ist das Schieberelement 38 in einer Ausgangsstellung gehalten, in der sie an einer von der Behälteröffnung 18 abgewandten Rückseite 58 des Verarbeitungsbehälters 6 angeordnet ist. In dieser Ausgangsstellung wird das Flüssigkeitsgemisch F beziehungsweise die zur Herstellung des Flüssigkeitsgemisches F benötigten Zutaten über die Einführhilfe 22 und die Einfüllöffnung 20 in den Innenraum 34 des Verarbeitungsbehälters 6 eingegeben. Um während eines späteren Herstellungsvorganges einen Austritt des Flüssigkeitsgemisches F beziehungsweise des hergestellten Produktes P über die Einführhilfe 22 zu vermeiden, kann diese dabei einen Schließmechanismus 60 aufweisen, durch den die Einführhilfe 22 verschlossen gehalten werden kann.

Nach dem Einfüllen des Flüssigkeitsgemisches F und gegebenenfalls weiterer Zutaten, wird die Herstellungsvorrichtung 2 eingeschaltet, wie beispielsweise durch eine entsprechende Steuerungseingabe am Bedienfeld 56. Hierbei werden der Antriebsmotor 8 der Rühreinrichtung 11 sowie der Kompressor 12 aktiviert, um das Flüssigkeitsgemisch F zur Herstellung des Produktes P in Form einer Eiscreme zu verrühren und gleichzeitig abzukühlen.

Während dieser Herstellung des Produktes P befindet sich die Kupplungseinrichtung 50 in der Haltestellung, in der das Gegengewindeteil 48 drehfest mit dem Achselement 46 der Rühreinrichtung 11 verbunden ist und sich dadurch gemeinsam mit dem Antriebselement 40 dreht. Auf diese Weise wird das Schieberelement 38 drehend in der Ausgangsstellung gehalten.

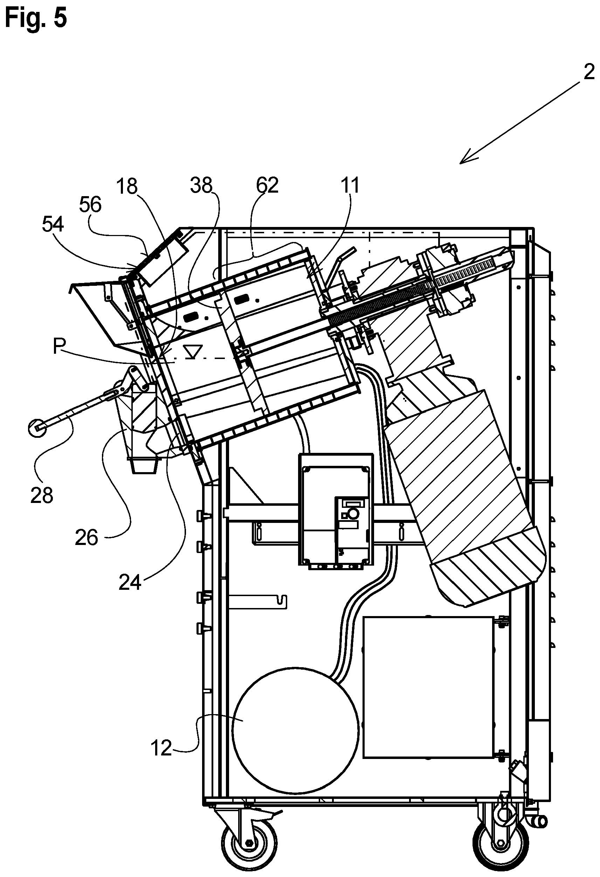

Sobald die Fertigstellung des Produktes P manuell oder durch eine mit der Steuerungseinrichtung 54 verbundenen Sensorik festgestellt wird beziehungsweise nach Ablauf einer vorgegebenen Bearbeitungszeit kann dann die Ausgabe des Produktes P über die Auslassöffnung 24 erfolgen. Hierzu wird die Kupplungseinrichtung 50, beispielsweise ebenfalls über eine Steuerungseingabe am Bedienfeld 56, in die Verlagerungsstellung umgeschaltet, in der das Gegengewindeteil 48 nun gegenüber dem gehäusefesten Träger 52 fixiert wird. Dadurch dreht sich nun das Antriebselement 40 im Betrieb der Rühreinrichtung 11 relativ zum Gegengewindeteil 48. Hierbei wird das Antriebselement 40 in Verlagerungsrichtung R aus dem Achselement 46 heraus verlagert. Auf diese Weise wird ein Auswurfhub gestartet, bei dem das Antriebselement 40 das am Rührwerk 36 geführt gelagerte Schieberelement 38 gemäß Figur 5 zunächst über einen Startabschnitt 62 hinweg mit einer relativ hohen Geschwindigkeit in Richtung der Behälteröffnung 18 verlagert. Dabei wird das Produkt P vom Schieberelement 38 zur Auslassöffnung 24 hin verlagert.

Wie aus Figur 5 zu entnehmen ist, weist das Produkt P in Folge der Verlagerung durch das Schieberelement 38 gegenüber der Ausgangsstellung gemäß Figur 2 einen deutlich höheren Pegel auf. Hierdurch liegt das Produkt P mit einem erhöhten hydrostatischen Druck an der Auslassöffnung 24 an. Dadurch kann auch eine hergestellte Eiscreme mit einer relativ festen und trockenen Mikrokristallstruktur, wie sie insbesondere bei hochwertiger Eiscreme vorhanden ist, beim Öffnen der Portionierarmatur 26 durch Betätigung der Handhabe 28 gleichmäßig und mit einer relativ hohen Ausgabegeschwindigkeit austreten.

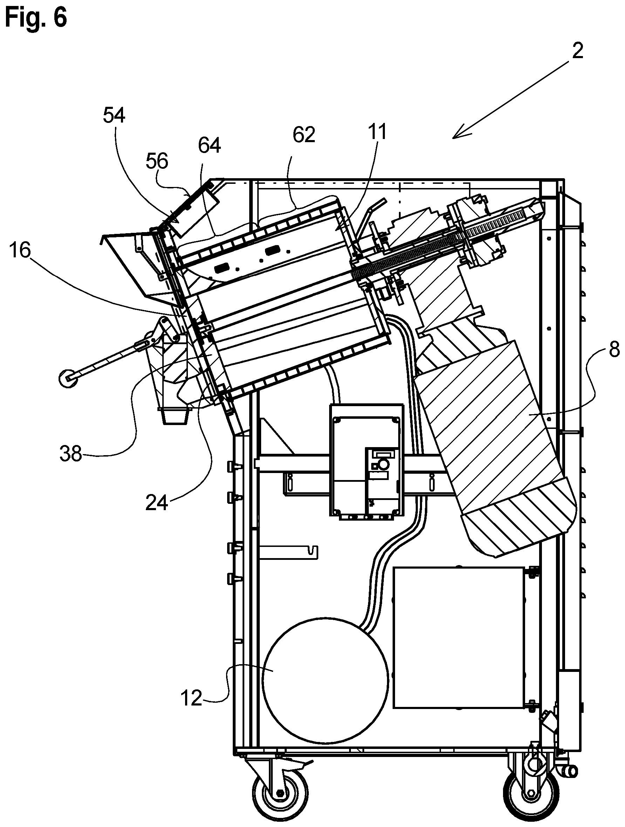

Nach dem Startabschnitt 62 durchläuft das Schieberelement 38 im Auswurfhub einen Endabschnitt 64 bis zu einer Endstellung gemäß Figur 6, in dem es benachbart zur Tür 16 beziehungsweise zur Auslassöffnung 24 angeordnet ist. Dabei erfolgt die Verlagerung des Schieberelementes 38 über den Endabschnitt 64 vorzugsweise mit einer gegenüber dem Startabschnitt 62 verringerten Geschwindigkeit. Hierdurch soll eine zu große mechanische Beanspruchung des Produktes und eine nachteilige Veränderung von dessen Mikrokristallstruktur während der Ausgabe über die Auslassöffnung 24 vermieden beziehungsweise minimiert werden. Die Veränderung der Geschwindigkeit kann dabei beispielsweise mittels der Steuerungseinrichtung 54 durch Veränderung einer Drehzahl des Antriebsmotors 8 erreicht werden. Alternativ hierzu kann das gewindestangenförmige Gegengewindeteil 48 auch unterschiedliche Gewindesteigungen aufweisen, die beim Kämmen mit dem Gewindeteil 44 während der Drehbewegung der Rühreinrichtung, zu einer unterschiedlich schnellen Verlagerung des Antriebselementes 40 führt.

Alternativ oder zusätzlich zum oben genannten Ablauf des Auswurfhubes kann auch ein kontinuierlicher Antrieb des Schieberelementes 38, ein sonstiges vorbestimmtes Geschwindigkeitsprofil und/oder ein von der Steuerungseinrichtung 54 in Abhängigkeit von wenigstens einer Sensorik gesteuertes Geschwindigkeitsprofil des Schieberelementes 38 vorgesehen sein.

Ferner kann die Antriebseinrichtung 42 des Schieberelementes 38 allein über eine Stromaufnahme ansteuerbar sein, so dass das Schieberelement 38 das hergestellte Produkt P im Auswurfhub mit einem im Wesentlichen gleichbleibenden Druck beaufschlagt.

Während des Auswurfhubes ist die Antriebseinrichtung 42 vorzugsweise in Abhängigkeit einer Stellung der Portionierarmatur 26 gesteuert, wobei das Schieberelement 38 beispielsweise nur dann linear verlagert wird, wenn die Portionierarmatur 26 in der Offenstellung steht und das Produkt dadurch über die Auslassöffnung 24 abgegeben werden kann. Wird die Portionierarmatur 26 dagegen in die Schließstellung umgeschaltet, so wird die lineare Verlagerung des Schieberelementes 38 beendet, wie beispielsweise durch Abschalten des Antriebsmotors 8 oder durch Verstellen der Kupplungseinrichtung 50 in die Haltestellung. Hierzu kann die Steuerungseinrichtung 54 beispielsweise mit einer Stellsensorik der Portionierarmatur 26 sowie mit einer Steuerung des Antriebsmotors 8 beziehungsweise der Kupplungseinrichtung 50 verbunden sein (nicht dargestellt), um einerseits die jeweils aktuelle Stellung der Portionierarmatur 26 zu ermitteln und in Abhängigkeit davon die Verlagerung des Schieberelementes 38 zu steuern.

Alternativ zur Kupplung des Antriebselementes 40 mit dem Antriebsmotor 8 der Rühreinrichtung 11 kann zur Aktivierung der Antriebseinheit 40 beziehungsweise zur Verlagerung des Schieberelementes 38 auch ein eigener Zusatzmotor vorgesehen sein (nicht dargestellt), der gänzlich unabhängig vom Antriebsmotor 8 zu und abgeschaltet werden kann.

In jedem Fall kann das Schieberelement 38 nach einem beendeten Herstellungs- und Ausgabevorgang über einen Rückholhub wieder in die Ausgangsstellung verbracht werden, um einen neuen Herstellungs- und Ausgabevorgang durchführen zu können
Alternativ zum Abfüllen des hergestellten Produktes P mittels Auswurf durch das Schieberelement 38 kann bei der Vorrichtung 2 optional auch eine Entnahme über die Tür 16 beziehungsweise über die an dieser vorgesehene Ausgabeöffnung 24 erfolgen, ohne dass hierzu das Schieberelement 38 verlagert wird. Hierzu kann an der Tür 16 statt der dargestellten Portionierarmatur 26 beispielsweise ein manuell verschiebbares Verschlusselement an der Auslassöffnung 24 vorgesehen sein.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Vorrichtung (2) zur Herstellung eines Produktes (P) in Form von Speiseeis aus einem Flüssigkeitsgemisch (F) umfassend
einen in einem Vorrichtungsgehäuse (4) vorgesehenen Verarbeitungsbehälter (6) mit einer temperierbaren Innenwandung (32), die einen zur Aufnahme des Flüssigkeitsgemisches (F) geeigneten Innenraum (34) umschließt, in dem ein Rührwerk (36) angeordnet ist, wobei der Verarbeitungsbehälter (6) eine Einfüllöffnung (20) für die Eingabe des Flüssigkeitsgemisches (F) und eine Auslassöffnung (24) für die Abgabe des Produktes (P) aufweist,
**dadurch gekennzeichnet, dass** im Innenraum (34) zusätzlich ein in Richtung der Auslassöffnung (24) verlagerbares Schieberelement (38) vorgesehen ist.

2. Herstellungsvorrichtung nach Anspruch 1, **dadurch gekennzeichnet, dass** das Schieberelement (38) durch eine entlang des Rührwerkes (36) verlagerbare und umlaufend an die Innenwandung (32) anlegbare, im Wesentlichen kreisförmige Scheibe gebildet ist.

3. Herstellungsvorrichtung nach Anspruch 1 oder 2, **dadurch gekennzeichnet, dass** das Schieberelement (38) am Rührwerk (36) geführt in einer Verlagerungsrichtung (R) linear verlagerbar ist.

4. Herstellungsvorrichtung nach einem der Ansprüche 1 bis 3, **dadurch gekennzeichnet, dass** das Schieberelement (38) mittels eines Antriebselementes (40) verlagerbar ist, das entlang einer Antriebsachse (A) des Rührwerks (36) in Richtung der Auslassöffnung (24) verlagerbar ist.

5. Herstellungsvorrichtung nach Anspruch 4, **dadurch gekennzeichnet, dass** das Antriebselement (40) innerhalb eines Achselementes (46) der Rühreinrichtung (11) bezüglich der Verlagerungsrichtung (R) wahlweise verlagerbar oder in einer Position fixierbar ist.

6. Herstellungsvorrichtung nach einem der Ansprüche 1 bis 5, **dadurch gekennzeichnet, dass** das Schieberelement (38) mittels einer Antriebseinrichtung (42) verlagerbar ist, die mit einem Antriebsmotor (8) der Rühreinrichtung (11) kuppelbar ist.

7. Herstellungsvorrichtung nach Anspruch 6, **dadurch gekennzeichnet, dass** die Antriebseinrichtung (42) eine mit einem Gewindeteil (44) des Antriebselementes (40) kämmende Gegengewindeteil (48) aufweist und zwischen einer Haltestellung, in der das Gegengewindeteil (48) zusammen mit dem Antriebselement (40) verdrehbar ist, und einer Verlagerungsstellung verstellbar ist, in der das Gegengewindeteil (48) unverdrehbar fixiert ist.

8. Herstellungsvorrichtung nach Anspruch 7, **dadurch gekennzeichnet, dass** die Antriebseinrichtung (42) mittels einer Kupplungseinrichtung (50) zwischen der Haltestellung und der Verlagerungsstellung umschaltbar ist.

9. Herstellungsvorrichtung nach Anspruch 8, **dadurch gekennzeichnet, dass** die Kupplungseinrichtung (50) durch eine Elektromagnetkupplung gebildet ist.

10. Herstellungsvorrichtung nach einem der Ansprüche 6 bis 9, **dadurch gekennzeichnet, dass** die Antriebseinrichtung (42) mittels einer Steuerungseinrichtung (54) in Abhängigkeit von einer Anzahl von Umdrehungen der Rühreinrichtung (11) zwischen der Haltestellungstellung und der Verlagerungsstellung umschaltbar ist.

11. Herstellungsvorrichtung nach einem der Ansprüche 6 bis 10, **dadurch gekennzeichnet, dass** die Antriebseinrichtung (42) in Abhängigkeit von einer Positionssensorik zwischen der Haltestellungstellung und der Verlagerungsstellung umschaltbar ist.

12. Herstellungsvorrichtung nach Anspruch 10 oder 11, **dadurch gekennzeichnet, dass** das Schieberelement (38) über die Steuerungseinrichtung (54) mit unterschiedlichen Geschwindigkeiten antreibbar ist.

13. Herstellungsvorrichtung nach Anspruch 12, **dadurch gekennzeichnet, dass** das Schieberelement (38) während eines Auswurfhubes in einem Startabschnitt (62) mit einer höheren Geschwindigkeit angetrieben ist als in einem Endabschnitt (64).

14. Herstellungsvorrichtung nach einem der Ansprüche 3 bis 13, **dadurch gekennzeichnet, dass** das Schieberelement (38) entlang der Verlagerungsrichtung R beidseitig verlagerbar ist.

15. Herstellungsvorrichtung nach einem der Ansprüche 6 bis 14, **dadurch gekennzeichnet, dass** das Schieberelement (38) durch einen, separat zum Antrieb der Rühreinrichtung (11) vorgesehenen Zusatzmotor verlagerbar ist.

16. Herstellungsvorrichtung nach einem der Ansprüche 1 bis 15, **dadurch gekennzeichnet, dass** an der Auslassöffnung (24) eine Portionierarmatur (26) vorgesehen ist.

17. Herstellungsvorrichtung nach Anspruch 16, **dadurch gekennzeichnet, dass** das Schieberelement (38) in Abhängigkeit einer Stellung der Portionierarmatur (26) verlagerbar ist.

18. Herstellungsvorrichtung nach einem der Ansprüche 1 bis 17, **dadurch gekennzeichnet, dass** sich der Verarbeitungsbehälter (6) und eine Antriebsachse (A) des Schieberelementes (38) zur Auslassöffnung (24) hin bezüglich der Gravitationsrichtung (G) schräg nach unten erstrecken.

## Claims

1. Device (2) for the preparation of a product (P) in the form of ice cream from a liquid mixture (F) comprising
a processing container (6) provided in a device housing (4) with a temperature-controlled inner wall (32), which encloses an inner space (34) suitable for receiving the liquid mixture (F), in which an agitator (36) is arranged, wherein the processing container (6) has a filling opening (20) for the input of the liquid mixture (F) and an outlet opening (24) for the discharge of the product (P),
**characterized in that** in the inner space (34) there is also a slide element (38) that can be relocated in the direction of the outlet opening (24).

2. Manufacturing device according to claim 1, **characterized in that** the slide element (38) is formed by an essentially circular disc which can be displaced along the agitator (36) and circumferentially in contact with the inner wall (32).

3. Manufacturing device according to claim 1 or 2, **characterized in that** the slide element (38) guided by the agitator (36) can be linearly displaced in one direction of displacement (R).

4. Manufacturing device according to any one of claims 1 to 3, **characterized in that** the slide element (38) can be displaced by means of a drive element (40) which can be displaced along a drive axis (A) of the agitator (36) in the direction of the outlet opening (24).

5. Manufacturing device according to claim 4, **characterized in that** the drive element (40) within an axis member (46) of the stirring apparatus (11) can either be displaced or fixed in one position with respect to the direction of displacement (R).

6. Manufacturing device according to any one of claims 1 to 5, **characterized in that** the slide element (38) can be displaced by means of a drive device (42) which can be coupled to a drive motor (8) of the stirring apparatus (11).

7. Manufacturing device according to claim 6, **characterized in that** the drive device (42) comprises a mating threaded portion (48) meshing with a threaded portion (44) of the drive element (40) and is adjustable between a holding position in which the mating threaded portion (48) is rotatable together with the drive element (40) and a displacement position in which the mating threaded portion (48) is fixed in an untwistable manner.

8. Manufacturing device according to claim 7, **characterized in that** the drive device (42) can be switched between the holding position and the displacement position by means of a coupling device (50).

9. Manufacturing device according to claim 8, **characterized in that** the coupling device (50) is formed by an electromagnetic coupling.

10. Manufacturing device according to any one of claims 6 to 9, **characterized in that** the drive device (42) can be switched between the holding position and the displacement position by means of a control device (54) depending on a number of revolutions of the stirring apparatus (11).

11. Manufacturing device according to any one of claims 6 to 10, **characterized in that** the drive device (42) can be switched between the holding position and the displacement position depending on a position sensor.

12. Manufacturing device according to claim 10 or 11, **characterized in that** the slider element (38) can be driven at different speeds via the control device (54).

13. Manufacturing device according to claim 12, **characterized in that** the slide element (38) is driven at a higher speed during an ejection stroke in a starting section (62) than in an end section (64).

14. Manufacturing device according to any one of claims 3 to 13, **characterized in that** the slide element (38) can be displaced on both sides along the direction of displacement R.

15. Manufacturing device according to any one of claims 6 to 14, **characterized in that** the slide element (38) can be relocated by an auxiliary motor provided separately to the drive of the stirring apparatus (11).

16. Manufacturing device according to any one of claims 1 to 15, **characterized in that** a portioning nozzle (26) is provided at the outlet opening (24).

17. Manufacturing device according to claim 16, **characterized in that** the slide element (38) can be displaced depending on the position of the portioning nozzle (26).

18. Manufacturing device according to any one of claims 1 to 17, **characterized in that** the processing container (6) and a drive axle (A) of the slide element (38) extend obliquely downwards towards the outlet opening (24) with respect to the gravitational direction (G).

## Revendications

1. Dispositif (2) pour la préparation d'un produit (P) sous forme de glace à partir d'un mélange liquide (F) comprenant
un récipient de traitement (6) installé dans un dispositif abritant (4) avec une paroi intérieure (32) à température contrôlée, qui enferme un intérieur (34) adapté à la réception du mélange liquide (F), dans lequel un agitateur (36) est installé, dans lequel le récipient de traitement (6) possède une ouverture de remplissage (20) pour l'entrée du mélange liquide (F) et une ouverture de sortie (24) pour l'évacuation du produit (P),
**caractérisée par le fait qu'**à l'intérieur (34) il existe également un élément de culasse (38) qui peut être déplacé dans la direction de l'ouverture de sortie (24).

2. Appareil de fabrication, selon la revendication 1, **se caractérise par le fait que** l'élément de culasse (38) est formé d'un disque essentiellement circulaire pouvant être déplacé le long de l'agitateur (36) et placé tout autour de la paroi intérieure (32).

3. Appareil de fabrication, selon la revendication 1 ou 2, **se caractérise par le fait que** l'élément de culasse (38) guidé par l'agitateur (36) peut être déplacé linéairement dans une direction de déplacement (R).

4. Appareil de fabrication, selon l'une des revendications 1 à 3, **caractérisé en ce que** l'élément de culasse (38) peut être déplacé au moyen d'un élément d'entraînement (40) qui peut être déplacé le long d'un axe d'entraînement (A) de l'agitateur (36) dans l'ouverture de sortie (24).

5. Appareil de fabrication, selon la revendication 4, **se caractérise par le fait que** l'élément d'entraînement (40) à l'intérieur d'un axe (46) du dispositif d'agitation (11) peut soit être déplacé, soit fixé dans une position par rapport à la direction de déplacement (R).

6. Appareil de fabrication, selon l'une des revendications 1 à 5, **caractérisé par le fait que** l'élément de culasse (38) peut être déplacé au moyen d'un dispositif d'entraînement (42) qui peut être couplé à un moteur d'entraînement (8) du dispositif d'agitation (11).

7. Appareil de fabrication, selon la revendication 6, **se caractérise par le fait que** le dispositif d'entraînement (42) comprend une pièce filetée d'accouplement (48) qui se coiffe avec une pièce filetée (44) de l'élément d'entraînement (40) et est réglable entre une position de maintien où la pièce filetée d'accouplement (48) est tournante avec l'élément d'entraînement (40) et une position de déplacement où la pièce filetée d'accouplement (48) est fixée de manière non tordable.

8. Appareil de fabrication, selon la revendication 7, **se caractérise par le fait que** le dispositif d'entraînement (42) peut être basculé entre la position de maintien et la position de déplacement au moyen d'un dispositif d'accouplement (50).

9. Appareil de fabrication, selon la revendication 8, **se caractérise par le fait que** le dispositif d'accouplement (50) est formé par un couplage électromagnétique.

10. Appareil de fabrication selon l'une des revendications 6 à 9, **caractérisé par le fait que** le dispositif d'entraînement (42) peut être basculé entre la position de maintien et la position de déplacement au moyen d'un dispositif de commande (54) selon un nombre de tours du dispositif d'agitation (11).

11. Appareil de fabrication, selon l'une des revendications 6 à 10, **caractérisé par le fait que** le dispositif d'entraînement (42) peut être basculé entre la position de maintien et la position de déplacement selon un capteur de position.

12. Appareil de fabrication, selon la revendication 10 ou 11, **caractérisé par le fait que** l'élément de culasse (38) peut être entraîné à différentes vitesses via le dispositif de commande (54).

13. Appareil de fabrication, selon la revendication 12, **caractérisé par le fait que** l'élément de culasse (38) est entraîné à une vitesse plus élevée lors d'un coup d'éjection dans une section de départ (62) que dans une section de fin (64).

14. Appareil de fabrication, selon l'une des revendications 3 à 13, **caractérisé par le fait que** l'élément de culasse (38) peut être déplacé des deux côtés dans la direction du déplacement R.

15. Appareil de fabrication, selon l'une des revendications 6 à 14, **caractérisé par le fait que** l'élément de culasse (38) peut être déplacé par un moteur auxiliaire fourni séparément pour l'entraînement de l'agitation (11).

16. Appareil de fabrication, selon l'une des revendications 1 à 15, **caractérisé par le fait qu'**un raccord de portionisation (26) est fourni à l'ouverture de sortie (24).

17. Appareil de fabrication, selon la revendication 16, **se caractérise par le fait que** l'élément de culasse (38) peut être déplacé selon la position du raccord de portionisation (26).

18. Appareil de fabrication selon l'une des revendications 1 à 17, **caractérisé par le fait que** le récipient de traitement (6) et un axe d'entraînement (A) de l'élément de culasse (38) s'étendent obliquement vers le bas vers l'ouverture de sortie (24) par rapport à la direction gravitationnelle (G).
